# FASCICULE DE BREVET EUROPEEN

(11) **EP 2 777 908 B1**
(45) Date de publication et mention de la délivrance du brevet: **16.05.2018**
(21) Numéro de dépôt: 14159000.0
(22) Date de dépôt: 11.03.2014
(51) Int. Cl.: B29C 35/08, B29C 33/38, B29C 70/42, B29B 11/16

(54) **Outillage pour la mise en oeuvre d'un matériau composite**
Werkzeug zur Anwendung eines Verbundmaterials
Tool for implementing a composite material

(30) Priorité: 11.03.2013 FR 1352149
(43) Date de publication de la demande: 17.09.2014
(73) Titulaire: Loiretech, 44470 Mauves sur Loire (FR)
(72) Inventeur: Bocquet, Romain, 44240 La Chapelle sur Erdre (FR)
(74) Mandataire: Ipside

(56) Documents cités:
- EP-A1- 0 347 299
- WO-A1-2011/073433
- WO-A2-2009/138782
- DE-A1-102008 029 058
- DE-A1-102009 052 835

## Description

L'invention concerne un outillage pour la mise en oeuvre d'un matériau composite. L'invention est plus particulièrement, mais non exclusivement, applicable à la cuisson d'une pièce composite constituée d'un renfort dans une matrice thermodurcissable, ou à la consolidation d'une pièce composite constituée d'un renfort dans une matrice thermoplastique.

Selon un mode de réalisation connu de l'art antérieur, une pièce composite est obtenue par le drapage en stratification de bandes de renfort fibreux, pré-imprégnées d'une résine thermodurcissable ou d'un polymère thermoplastique. Ledit drapage est réalisé manuellement ou par dépose automatique sur un outillage comportant une empreinte à la forme de la pièce à réaliser. À ce stade de mise en oeuvre, l'ébauche de la pièce, ou préforme, ne présente qu'une faible cohésion. Aussi, suite à l'opération de drapage la pièce est obtenue par une opération de cuisson ou de consolidation, consistant à porter l'empilement de plis, mis en forme sur l'outillage, à une température et une pression permettant de rendre cohésive la stratification dans la matrice. Cette opération de cuisson/consolidation est réalisée avec la préforme installée sur l'outillage, soit en autoclave soit à partir d'un outillage auto-chauffant. Selon ces modes de réalisation de l'art antérieur, cette opération nécessite le chauffage de la masse représentée par l'outillage. Or, ledit outillage représente couramment une masse 1 000 à 10 000 fois supérieure à celle de la pièce. Par suite, ces opérations de cuisson/consolidation sont longues et consommatrices d'énergie, particulièrement en présence de pièces de grande dimension, et influencent défavorablement le coût de réalisation de telles pièces composites, interdisant leur utilisation économique dans certains domaines d'activité.

Plusieurs technologies permettant de réduire la masse chauffée de l'outillage sont connues de l'art antérieur mais présentent des limitations ou des difficultés quant à leur mise en oeuvre. Ainsi, les techniques de chauffage par induction nécessitent des générateurs puissants et onéreux, qui, le plus souvent, ne travaillent pas dans des conditions de rendement favorables compte tenu du circuit résonant constitué par le moule et dont les caractéristiques sont dictées par la forme de la pièce. De plus, cette technologie ne permet pas de réaliser un contrôle précis de la valeur de la température et de l'uniformité de sa répartition sur l'ensemble de la surface moulée, particulièrement lorsque cette uniformité, de valeur et de distribution, doit être conservée pendant un temps, certes court, mais suffisant pour obtenir la réticulation de la résine ou la répartition uniforme du polymère thermoplastique constituant la matrice de la pièce composite. Cette technologie d'induction est par ailleurs délicate de mise en oeuvre en présence de moules dits à double face, comportant un poinçon et une matrice, et qui impliquent la réalisation de connexions électriques complexes et des risques d'arcs électriques lors de l'ouverture et de la fermeture du moule. Finalement, l'utilisation de la technologie par induction est délicate en présence d'une pièce composite comportant un renfort électriquement conducteur, comme, par exemple, des fibres de carbone, dont la présence de plis dans le moule est susceptible de perturber le circuit électrique et la réponse de l'outillage aux courants induits. La réalisation du circuit d'induction par l'extérieur du moule ou par l'insertion d'inducteurs dans celui-ci rend la réalisation dudit moule complexe et coûteuse notamment en ce qui concerne son usinage.

Le document FR 2 402 526 décrit un moule et un procédé de chauffage d'un matériau diélectrique par l'utilisation de micro-ondes, c'est-à-dire par un rayonnement électromagnétique dont la fréquence est comprise entre 300 MHz et 300 GHz (300.10⁶ à 300.10⁹ cycles par secondes), dans le but réaliser un objet en mousse expansée. Ainsi, des billes de matière plastique sont placées dans la cavité d'un moule, dite empreinte, avec de l'eau. La carcasse du moule est constituée d'un matériau transparent au micro-ondes, par exemple du verre, l'empreinte étant constituée d'un matériau présentant des pertes diélectriques élevées, en l'occurrence une résine chargée d'une faible proportion de noir de carbone. Ainsi l'empreinte est chauffée en même temps que le mélange se trouvant à l'intérieur de la cavité, de sorte que la consommation énergétique est réduite, ainsi que le temps de chauffage, car l'échange thermique entre la matière et le moule est réduit, ladite empreinte étant chauffée en même temps que la matière à mouler. Selon cet exemple de réalisation, la fréquence des micro-ondes est calée sur 2,45 GHz, dans une bande de fréquence dite bande S, cette fréquence étant absorbée par les molécules d'eau. Ainsi, selon cet exemple de réalisation de l'art antérieur, les micro-ondes agissent directement sur la phase aqueuse présente dans la cavité et la température atteinte par le mélange, environ 100 °C, est dictée par la transition de phase de ladite phase aqueuse.

Pour la cuisson ou de la consolidation d'un matériau composite à matrice polymère, la température de traitement est de 180 °C environ, dans le cas d'une matrice en résine thermodurcissable, et atteint 400 °C dans le cas d'une matrice constituée d'un polymère thermoplastique tel que le polyétheréthercétone (PEEK). Le polymère constituant la matrice d'un tel matériau composite étant transparent aux micro-ondes, il n'est pas possible de le chauffer par le procédé de l'art antérieur.

Le document WO 2009/138782 décrit une méthode adaptée au chauffage direct de la matrice polymère thermodurcissable d'un matériau composite au moyen de micro-ondes, en introduisant dans ladite matrice un suscepteur sous la forme de particules électriquement conductrices, lesquelles particules absorbent les micro-ondes et provoquent l'échauffement de ladite matrice. Cette méthode implique l'addition d'une charge, sans rôle structurel, dans le composite, laquelle addition a un effet défavorable sur le coût et la masse dudit composite. De plus, cette méthode reste difficile d'application dans le cas de la cuisson ou de la consolidation d'un pré-imprégné fibreux dont les fibres sont électriquement conductrices, lesdites fibres absorbant les micro-ondes et provoquant des étincelages et des brûlures de la matrice.

Le document EP 2 498 965 décrit un moule pour la mise en oeuvre d'un matériau composite lequel moule comporte, de manière localisée, l'application d'un film sensible aux micro-ondes. Ledit film est appliqué directement sur la préforme ou sur la face moulante du moule à des emplacements où une réponse particulière au chauffage est visée. Les contours du film sont « imprimés » à la surface de la pièce ainsi mise en oeuvre et produisent des défauts, de type ressaut, ce qui nécessite l'utilisation d'un film particulièrement fin pour maintenir ces défauts dans des valeurs acceptables pour une pièce fortement sollicitée. À titre d'exemple, sur une pièce composite de structure dans le domaine aéronautique un tel ressaut doit être inférieur à 0,05 mm. De plus, ce mode de réalisation n'est pas adapté à la couverture d'une grande surface de l'empreinte par ledit film sensible, lorsque la forme de cette empreinte est une surface non développable. Dans ce cas, l'application du film sur ladite surface est problématique et conduit à la formation de plis, sauf à mouler le film sur la surface moulante. Outre la complexité de ce dernier mode de réalisation, ledit film constitué d'un polymère chargé est soumis à l'usure. Finalement un tel film souple est susceptible de se déformer de manière différentielle par rapport à la structure du moule constituée d'un matériau très différent en matière de propriétés, ce qui conduit à des décollements dudit film et à son usure. Ainsi, ce dispositif de l'art antérieur est peu adapté à une mise en oeuvre industrielle pour une production en série

Le document DE102009052835 décrit un dispositif et un procédé pour la cuisson d'une préforme fibreuse préimprégnée d'une résine thermodurcissable utilisant un film thermoélectrique souple. La préforme est comprise dans une cavité étanche formée entre un outillage rigide et un ensachage. Ledit film thermoélectrique est, selon différents mode de réalisation placé soit entre l'ensachage et la préforme, soit sous l'outillage rigide sur la face opposée à la face recevant la préforme, ledit film thermoélectrique étant séparé du contact avec la préforme par l'outillage rigide lui-même, ces deux situations pouvant être combinées. Ledit film thermoélectrique est constitué essentiellement d'un matériau perméable aux micro-ondes comportant une charge sensible aux micro-ondes et le cas échéant différents additifs pour en améliorer la conductivité thermique.

Le document WO 2009/138782 décrit dans un de ces modes de réalisation un procédé et un dispositif pour la cuisson d'une préforme fibreuse préimprégnée d'une résine thermodurcissable, lequel dispositif comporte un outillage constitué d'un matériau céramique transparent aux micro-ondes et qui comporte sur sa face en contact avec la préforme un revêtement comprenant des suscepteurs sensibles aux micro-ondes. La cuisson de la résine est obtenue par l'effet conjugué de la réponse aux micro-ondes des fibres de carbone de la préforme fibreuse, des particules sensibles aux micro-ondes comprise dans la résine et finalement du revêtement comprenant des suscepteurs, déposé sur la face du moule.

Le document DE 10 2008029058) décrit un procédé et un dispositif pour la cuisson d'une préforme fibreuse préimprégnée d'une résine thermodurcissable de grandes dimensions et comportant des nervures. La préforme est placée sur un support, et des éléments locaux de chauffage comportant une surface couverte par un revêtement sensible aux micro-ondes, permettent de chauffer les nervures.

Le document EP 0347299 décrit un procédé et un dispositif pour la cuisson d'une pièce constitué d'un polymère thermodurcissable et comportant un renfort fibreux ainsi qu'une charge, ladite résine étant réceptive au micro-ondes. L'ébauche est placée entre deux corps de moule rigides, constitués d'un matériau transparent aux micro-ondes et définissant une cavité fermée dans laquelle se trouve ladite ébauche. L'ensemble est placé dans une cavité résonnante soumise aux micro-ondes, qui ont pour effet un chauffage direct du polymère constituant la pièce. L'invention vise à résoudre les inconvénients de l'art antérieur et concerne à cette fin un dispositif adapté au chauffage d'une préforme composite fibreuse, lequel dispositif comporte :
a. un moule constitué d'un matériau céramique transparent aux micro-ondes et comportant une empreinte ;
b. une couche de revêtement dur comportant un matériau ferrimagnétique à la surface de l'empreinte.
c. un deuxième corps de moule constitué d'un matériau céramique comportant une deuxième empreinte complémentaire de la première empreinte, la surface de ladite deuxième empreinte comportant une couche de revêtement dur constituée d'un matériau comprenant un composant ferrimagnétique.

Ainsi, soumise au rayonnement électromagnétique la couche comportant le matériau ferrimagnétique absorbe les micro-ondes et monte en température. Ladite couche absorbante couvre la totalité ou une partie de la surface de l'empreinte, laquelle partie est en contact avec la préforme fibreuse. L'utilisation d'un moule constitué d'un matériau céramique, outre la transparence aux micro-ondes, est avantageuse pour la faible conductivité thermique dudit matériau, de sorte que l'échange de chaleur allant de la couche comprenant le matériau ferrimagnétique vers la préforme, est favorisé. Ainsi, le dispositif objet de l'invention permet de réduire considérablement la masse chauffée et de réduire les temps de cycle en utilisant des moyens simples de mise en oeuvre, sans nécessiter de raccordement du moule à une source d'énergie ou l'installation de moyen de chauffage dans ledit moule. L'utilisation d'un contre-moule permet de créer une cavité à volume constant entre les deux empreintes, avantageuse pour la mise en oeuvre des matériaux à matrice thermoplastique où ladite matrice doit être portée à sa température de fusion au cours de l'opération de consolidation. De plus, le revêtement de la deuxième empreinte par une couche sensible aux micro-ondes conducteurs de l'électricité tels que des fibres de carbone. En effet, sans être lié par une quelconque théorie, l'absorption privilégiée des micro-ondes par les composants ferrimagnétiques et les propriétés diélectriques de ces composants évitent les phénomènes d'arcs sur lesdits renforts, y compris aux extrémités des fibres. La couche de revêtement sur les empreintes est une couche dite dure, c'est-à-dire dont la dureté est au moins au moins 10 fois supérieure à celle des pièces mise en oeuvre dans le moule objet de l'invention. Ainsi, les caractéristiques du dispositif objet de l'invention coopèrent pour l'obtention d'une pièce composite répondant à des exigences élevées dans le cadre d'une production de série mettant en oeuvre un chauffage par micro-ondes.

La propriété de ferrimagnétisme se dit d'un matériau dont les moments magnétiques s'alignent de manière antiparallèle dans les domaines de Weiss mais sont d'amplitudes différentes, de sorte qu'ils ne se compensent pas.

L'invention est avantageusement mise en oeuvre selon les modes de réalisation exposés ci-après, lesquels sont à considérer individuellement ou selon toute combinaison techniquement opérante.

Avantageusement, le matériau céramique constituant un corps de moule comprend une cordiérite. Ce matériau est en effet facilement usinable, réfractaire, et présente un faible retrait au frittage. De plus, sa constante diélectrique et son angle de perte sont faibles à 2,4 GHz ce qui le rend particulièrement adapté à l'utilisation visée.

La cordiérite est une forme de cyclosilicate constituée de silicate de magnésium et de silicate d'aluminium, le rapport Al/Si étant proche de 1/5. Ce matériau de constitution du moule est plus particulièrement adapté à la mise en oeuvre d'une préforme fibreuse comprenant des fibres de carbone. Ce matériau est également particulièrement adapté à une mise en oeuvre par le procédé dit de « *freeze casting* » procédé de moulage basé sur un processus de solution-gélification (sol-gel).

Selon un mode de réalisation alternatif, le matériau constituant un corps de moule comprend une alumine. Ce mode de réalisation est plus particulièrement adapté à la mise en oeuvre d'une préforme fibreuse comportant des fibres de verre.

Avantageusement, le matériau constituant un corps de moule comporte un renfort. Selon le mode de réalisation ledit renfort est un renfort fibreux, par exemple sous la forme de fibre d'alumine ou un renfort plus macroscopique sous la forme de tiges en céramique. Ainsi la résistance du moule est augmentée pour des applications particulièrement exigeantes.

Avantageusement, le matériau ferrimagnétique est un ferrite. Ce matériau est particulièrement absorbant vis-à-vis des micro-ondes et permet de générer des températures élevées, nettement supérieures à leur température de Curie.

Avantageusement, le ferrite est un ferrite spinelle de nickel-zinc (Ni Zn). Cette formulation du ferrite permet d'obtenir un matériau à angle de perte élevé vis-à-vis des micro-ondes à une fréquence de l'ordre de 2,4 GHz. Ainsi, le matériau absorbe fortement lesdites micro-ondes et monte rapidement en température. De plus ce type de ferrite offre l'avantage d'être peu conducteur de l'électricité.

Selon une première variante de réalisation, la couche de revêtement est une couche de cordiérite chargée en ferrite. Ce mode de réalisation permet de calibrer l'épaisseur, constante ou variable, de la couche de revêtement celle-ci étant frittée en même temps que les corps de moule.

Avantageusement, la teneur en ferrite dans la couche de revêtement de cette première variante de réalisation est comprise entre 15 % et 30 % pondéraux. La teneur en ferrite accroît la rapidité de chauffage mais augmente aussi la différence de dilatation thermique entre le corps de moule et la couche de revêtement et ainsi les risques de tressaillage ou de décollement dudit revêtement.

Avantageusement, selon cette première variante de réalisation l'épaisseur de la couche de revêtement est comprise entre 3 mm et 5 mm. L'épaisseur de la couche de revêtement influence la vitesse de chauffage pour une exposition à une puissance de rayonnement donnée. Toutefois, les éventuelles incompatibilités de déformation entre la couche de revêtement et le substrat sont d'autant plus importantes que l'épaisseur du revêtement est élevée. Pour la plupart des applications une épaisseur comprise entre 3 mm et 5 mm offre un compromis favorable.

Selon une deuxième variante de réalisation du dispositif objet de l'invention, le matériau ferrimagnétique est contenu dans une couche d'émail. Ainsi, cette couche de revêtement composite présente un coefficient de dilatation thermique proche de celui de la préforme et proche de celui du corps de moule, de sorte que les contraintes thermiques dans ladite couche sont réduites et que la couche n'est pas sensible au phénomène de tressaillage. Ce mode de réalisation offre également l'avantage d'être compatible avec des réparations par rechargement.

Avantageusement, le matériau ferrimagnétique est compris dans la couche d'émail sous la forme de particules d'un diamètre majoritairement compris entre 10 µm et 100 µm pour un d₅₀ compris entre 50 µm et 70 µm. Cette granulométrie grossière permet aux particules de ferrites de résister à l'attaque chimique de l'émail durant la cuisson du moule.

Avantageusement, le tau de matériau ferrimagnétique compris dans la couche d'émail est compris entre 15 % et 30 % en teneur pondérale. Ce mode de réalisation permet d'obtenir un revêtement auto-lissant, avec une faible rugosité Ra de l'ordre de 1 µm, procurant un aspect de surface compatible notamment avec des pièces de carrosserie automobile, tout en conservant un coefficient de dilatation thermique proche de celui de la cordiérite.

Avantageusement, la couche de revêtement couvre la surface de l'empreinte selon une épaisseur variable de sorte à maîtriser la répartition de température sur la surface de ladite empreinte. En effet, la vitesse de chauffage à puissance de rayonnement donné, est dépendante de l'épaisseur de la couche de revêtement. Ainsi, cette propriété est utilisée pour corriger les éventuels défauts de répartition de la température à la surface de l'empreinte par rapport à l'effet visé.

Selon un mode de réalisation particulier, le dispositif objet de l'invention comporte :
e. une couche de revêtement non ferrimagnétique couvrant tout ou partie de la couche de revêtement comportant un matériau ferrimagnétique.

Cette constitution multicouches permet de modifier la répartition de température à la surface de l'empreinte en agissant notamment sur l'effusivité thermique des couches en présence.

Ainsi, selon un exemple de réalisation, la couche de revêtement non ferrimagnétique est de conductivité thermique élevée de sorte à uniformiser la dissipation thermique à la surface de l'empreinte.

Selon un autre exemple de réalisation la couche de revêtement non ferrimagnétique est thermiquement isolante de sorte à limiter le transfert thermique entre l'empreinte et la préforme.

Ces exemples de réalisation n'étant pas exclusifs l'un de l'autre.

Selon une troisième variante de réalisation du dispositif objet de l'invention, le matériau ferrimagnétique est compris dans une couche de liant inorganique d'aluminium-phosphate. Ce type de revêtement présente l'avantage d'être applicable à froid.

Avantageusement, le dispositif objet de l'invention comporte :
f. une enceinte apte à contenir le moule ;
g. des moyens aptes à générer un rayonnement électromagnétique de micro-ondes à l'intérieur de l'enceinte.

Avantageusement, la fréquence des micro-ondes est sensiblement égale à 2,45 GHz (2,45. 10⁹ cycles par seconde). Ainsi, le dispositif objet de l'invention met en oeuvre de manière économique un magnétron classique.

L'invention concerne également un procédé pour la cuisson ou la consolidation d'une préforme fibreuse pré-imprégnée d'un polymère, utilisant le dispositif objet de l'invention, lequel procédé comporte les étapes consistant à :
i. draper la préforme fibreuse sur l'empreinte ;
ii. placer le moule à l'intérieur de l'enceinte ;
iii. générer un rayonnement électromagnétique à l'intérieur de l'enceinte selon un profil temporel de puissance de sorte à porter la préforme fibreuse à une température de cuisson ou de consolidation selon une répartition de température déterminée à la surface de l'empreinte.

Le procédé objet de l'invention permet de cuire ou de consolider une préforme composite de manière économique avec des temps de cycle courts.

Avantageusement, le procédé objet de l'invention comporte avant l'étape iii) une étape consistant à :
iv. déterminer par simulation le profil temporel de puissance du rayonnement à générer.

Ainsi, la température de transformation de la préforme est maîtrisée tant en valeur qu'en répartition.

L'invention est exposée ci-après selon ses modes de réalisation préférés, nullement limitatifs, et en référence aux figures 1 à 6, dans les quelles :
- la figure 1 montre selon une vue en coupe un exemple schématique de réalisation du dispositif objet de l'invention ;
- la figure 2 illustre un exemple de variation de la vitesse de chauffage obtenue lors de l'application d'un rayonnement l'électromagnétique à une couche de ferrite en fonction de l'épaisseur de ladite couche ;

- la figure 3 montre selon une vue en coupe un exemple de réalisation d'un moule du dispositif objet de l'invention comprenant un contre-moule ;
- la figure 4 est une vue de détail Z définie figure 3, montrant une exemple de réalisation multicouche du revêtement de moule objet de l'invention ;
- la figure 5 est un logigramme illustrant le déroulement du procédé objet de l'invention ;
- et la figure 6 montre selon une vue schématique en perspective et en éclaté, un exemple de mise en oeuvre du dispositif objet de l'invention pour le traitement d'une préforme fibreuse.

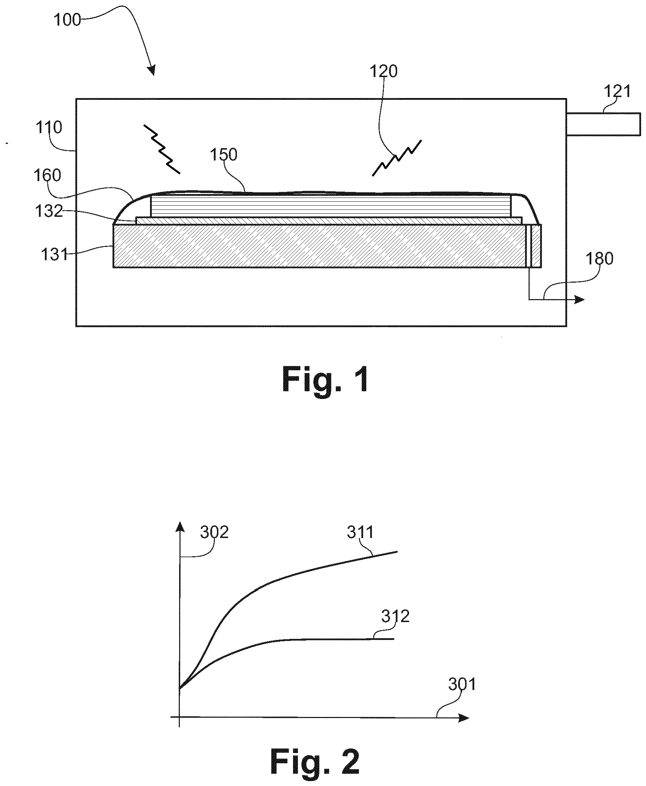

Figure 1, selon un exemple de réalisation, le dispositif objet de l'invention comprend une enceinte (110) ou cavité résonante, laquelle comporte des moyens (121) pour générer des micro-ondes (120) à l'intérieur de ladite enceinte. Selon un exemple de réalisation, les moyens de génération des micro-ondes comportent un guide (121) d'ondes, alimenté par un magnétron (non représenté) à une fréquence de 2,45 GHz. Selon un mode de réalisation particulier, plusieurs moyens de ce type sont agencés autour de l'enceinte. La technologie de la génération des micro-ondes dans une cavité résonante est connue de l'art antérieur est n'est pas exposée plus avant.

Le dispositif (100) objet de l'invention est utilisé, par exemple, pour la cuisson d'une préforme (150) fibreuse stratifiée. À titre d'exemple non limitatif, ladite préforme (150) est constituée de plis de fibres de carbone ou de verre pré-imprégnés d'une résine thermodurcissable polyester ou époxyde. Selon un autre mode de réalisation lesdits plis sont dits imprégnés d'un polymère thermoplastique, tel que du PEEK, lequel polymère est intégré aux plis par des fibres co-mêlées, par poudrage ou par un film calandré sur le pli. Le dispositif objet de l'invention s'adresse plus particulièrement à la réalisation d'une pièce composite destinée à une application dans le domaine de l'automobile ou de l'aéronautique, c'est-à-dire dont la surface est de l'ordre du m² jusqu'à une dizaine de m².

La préforme est placée sur un outillage, lequel outillage comporte un corps de moule(131) constitué d'une céramique présentant un faible angle de perte vis-à-vis du rayonnement (120) électromagnétique à la fréquence visée. Sur la surface du corps de moule, en contact avec la préforme (150), une couche (132) d'un matériau absorbant le rayonnement (120) électromagnétique est déposée. Selon un exemple de réalisation, ladite couche absorbante comprend des ferrites. Lesdits ferrites sont déposés à la surface du corps (131) de moule par projection plasma, par l'application d'un émail comprenant des particules de ferrite en suspension dans la couche d'émail, par l'application, au pinceau ou au pistolet, d'une solution aqueuse comprenant lesdits ferrites et un liant inorganique d'aluminium-phosphate. Selon un autre mode de réalisation les ferrites sont introduits dans la céramique d'une couche du corps de moule.

Le corps (131) de moule est constitué d'une céramique adaptée à la nature de la préforme transformée. À titre d'exemple non limitatif, la céramique sélectionnée est une alumine lorsque la préforme est constituée de plis de fibres de verre. La céramique sélectionnée est une cordiérite lorsque la préforme comprend des fibres de carbone. En effet le coefficient de dilatation thermique des cordiérites est du même ordre de grandeur que celui de la fibre de carbone.

Selon un exemple de réalisation, le corps de moule est obtenu par un procédé dit « *freeze casting* », consistant à réaliser un sol-gel thixotrope comprenant la poudre céramique, puis à geler la solution colloïdale, notamment en la plongeant dans l'azote liquide, ce qui provoque la précipitation de la céramique sous la forme d'un gel lequel est alors séché en étuve à basse température ou fritté à une température plus élevée. Ce mode de réalisation est avantageux car il permet une réalisation rapide et économique de l'outillage. L'étape finale du procédé est fonction de l'utilisation du moule, celui-ci est simplement étuvé pour des applications peu sollicitantes, ou fritté, afin de lui conférer des propriétés mécaniques plus élevées, pour des applications plus exigeantes. Cette méthode de réalisation du moule par un procédé de type sol-gel permet de réaliser un moule de structure stratifiée en coulant plusieurs couches, et ainsi, selon le mode de réalisation, d'insérer des renforts dans ou de modifier la composition desdites couches, notamment en combinant des particules de ferrites dans la couche constituant la face moulante du corps de moule. Selon un autre exemple de réalisation, le corps de moule est obtenu par un procédé dit « *slip casting* », ou moulage en barbotine, consistant à couler une barbotine comprenant de l'eau et une poudre céramique à température ambiante dans un moule en plâtre. Le plâtre absorbe l'eau et permet de d'obtenir la forme à l'état vert, laquelle est étuvée pour la sécher puis frittée à haute température.

La forme de l'ébauche du corps (131) de moule, est conçue de sorte que l'application la couche (132) de matériau absorbant, quelque soit le mode de réalisation, permette d'obtenir à la fois la précision dimensionnelle requise et la maîtrise de l'épaisseur de ladite couche de revêtement. Ainsi, dans le cas de l'application ultérieure du revêtement, par exemple par émaillage, l'ébauche est usinée de sorte à tenir compte des variations d'épaisseur visées. L'utilisation d'une couche de revêtement dure, assure la précision et la stabilité dimensionnelle des surfaces moulantes notamment lorsque les dites surfaces sont soumises à la pression nécessaire à la mise en oeuvre du processus de cuisson ou de consolidation et la résistance de cette couche à l'usure.

Les ferrites utilisés sont des ferrites spinelle du type NiZn de formule générale :
NiₓZn_{y}Fe_{(3-x-y)}O₄ comprenant d'autres éléments en faible quantité. Lesdits ferrites ont une influence sur les propriétés de la couche de revêtement dans laquelle ils sont introduits, notamment en augmentant le coefficient de dilatation thermique de ladite couche. Une teneur en ferrites comprise entre 15 % et 30 % en poids dans la couche de revêtement, que le revêtement soit constitué d'une couche de cordiérite chargée ou d'une couche d'émail, offre des points de fonctionnement adaptés entre productivité et tenue du revêtement sur le substrat. Cette compatibilité de déformation entre le substrat et le revêtement offre plus de souplesse dans le choix de l'épaisseur du revêtement.

Figure 2, l'analyse de l'influence de l'épaisseur de la couche absorbante sur la température (302) atteinte après un temps (301) d'exposition du matériau ferrimagnétique à une puissance constante de rayonnement électromagnétique, montre qu'une épaisseur (311) plus importante de revêtement, par exemple 20 mm, produit un échauffement plus rapide et jusqu'à une température plus élevée qu'une épaisseur (312) plus faible, par exemple 5 mm. Ainsi, la répartition de la vitesse de chauffage à la surface de l'empreinte est avantageusement prédéterminée pour un champ de rayonnement donné, en agissant sur l'épaisseur du revêtement. Dans ce cas, la phase d'usinage de l'empreinte tient compte de ces variations d'épaisseur pour conserver la forme finale de la pièce.

En revenant à la figure 1, selon un exemple de réalisation non couvert par l'invention, le moule est de type simple face. La préforme (150) est, par exemple, enserrée dans une bâche étanche (160) et le moule comporte des moyens (180) pour tirer au vide le volume compris entre l'empreinte et ladite bâche. Selon cet exemple de réalisation, lorsque le renfort du matériau composite constituant la préforme est électriquement conducteur, les extrémités dudit renfort sont couvertes par une bande d'aluminium pour éviter les arcs.

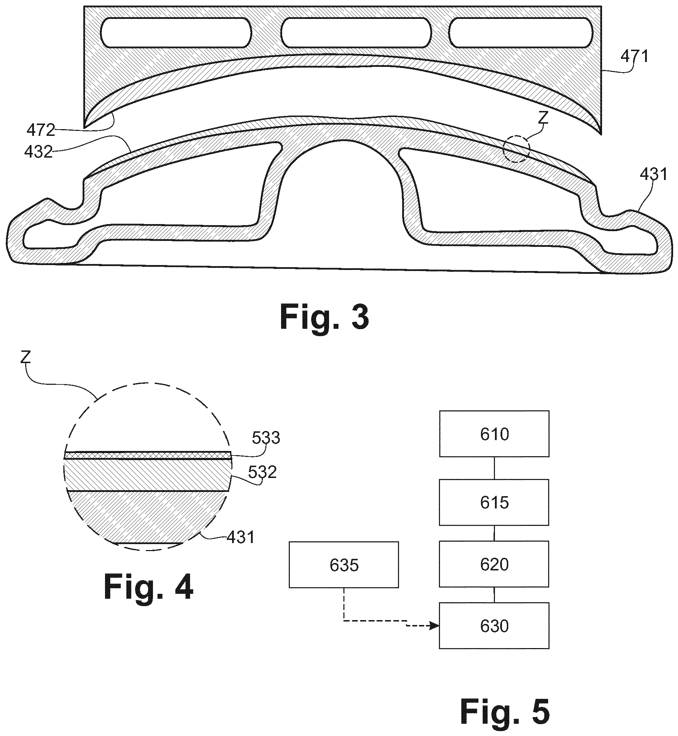

Figure 3, selon un exemple de réalisation, plus particulièrement adapté au cas d'un moule de grande dimension, la couche (432) de revêtement est d'épaisseur variable en fonction de la répartition de vitesse de chauffage visée. Le moule objet de l'invention comporte un contre-moule constitué d'un corps (471) de moule comportant une couche (472) d'un revêtement absorbant les micro-ondes. Les constitutions du moule et du contre-moule sont similaires. Selon ce mode de réalisation les arcs aux extrémités des fibres sont évités sans préparation particulière de la préforme. L'utilisation d'un contre-moule est également adapté à la mise en oeuvre d'une opération de compactage-consolidation d'une préforme dont la matrice est constituée d'un polymère thermoplastique.

Figure 4, selon un exemple de réalisation avantageux, le revêtement constitutif de l'empreinte est constitué d'une pluralité de couches. Ainsi, une première couche (532) est constituée d'un matériau contenant des ferrites, l'épaisseur de ladite couche (532) étant contrôlée pour déterminer la vitesse locale de chauffage. Sur cette couche (532) absorbante, une autre couche (533), par exemple dont l'effusivité thermique est plus élevée est déposée de sorte à faciliter l'homogénéisation de la température sur toute la surface de l'empreinte. Alternativement ou de manière complémentaire une couche thermiquement isolante est déposée sur la totalité ou une partie de la surface de l'empreinte. Selon un mode de réalisation particulier ledit revêtement (533) supplémentaire est sélectionné pour son aptitude à faciliter le démoulage de la pièce.

Ces différentes variantes de réalisation, associées au contrôle de la puissance de chauffage, permettent de maîtriser le chauffage de la préforme, sans avoir recours à l'inertie thermique de l'outillage, et ainsi de réduire les temps de cycles et la consommation énergétique. Ainsi, les paramètres suivants sont utilisés pour déterminer les conditions de chauffage de la préforme :
- l'action sur la source d'énergie : puissance, temps d'application et fréquence du rayonnement;
- l'action sur la nature des ferrites utilisées pour la couche absorbante de revêtement ;
- l'épaisseur du revêtement, et sa variation sur l'empreinte ;
- la présence d'un revêtement supplémentaire sur le revêtement absorbant le rayonnement électromagnétique.

Ainsi la combinaison de ces paramètres est avantageusement déterminée, par exemple par simulation numérique, pour obtenir le résultat visé.

Figure 5, le procédé utilisant le dispositif objet de l'invention permet d'obtenir de manière économique et avec un temps de cycle court une pièce composite structurelle, notamment de grande dimension, selon les étapes suivantes :
- une première étape (610) consiste à draper la préforme sur l'empreinte du moule ou demi-moule objet de l'invention. Ledit drapage est, selon la forme et la nature de la pièce, réalisé manuellement ou avec de moyens de drapage automatisés ;
- selon une étape optionnelle (615) un contre-moule est installé sur la préforme ;
- ensemble est placé dans l'enceinte, au cours d'une étape (620) d'enfournement ;
- puis, l'étape (630) de cuisson est réalisée en soumettant l'outillage contenant la préforme à un rayonnement électromagnétique de puissance déterminée selon un temps donné pour obtenir la cuisson/consolidation de la préforme. Selon un mode de réalisation particulier, cette étape (630) comporte la variation temporelle de la puissance de rayonnement appliqué selon un profil prédéterminé au cours d'une étape (635) de simulation.

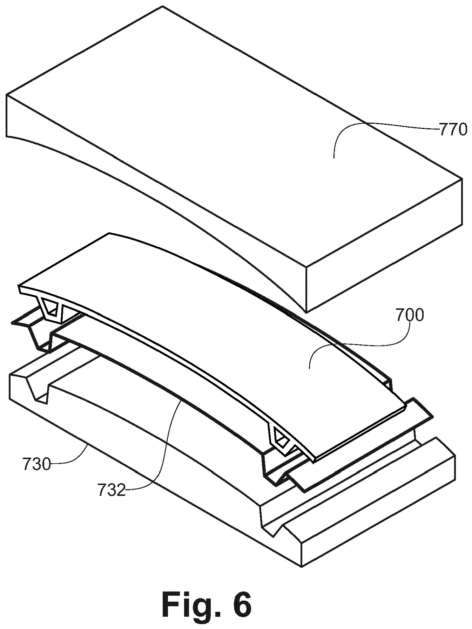

Figure 6, selon un exemple d'application, le dispositif objet de l'invention est utilisé pour la cuisson ou la consolidation d'une préforme (700) fibreuse pour la constitution d'un panneau raidi comprenant des raidisseur en forme d'oméga. L'outillage utilisé à cette fin comporte un moule (730) et un contre-moule (770). Selon cet exemple de réalisation, le moule (730) de forme complexe est obtenu par un moulage en barbotine. Après démoulage, la pièce est séchée en étuve à 40 °C, puis frittée à une température comprise entre 1200 °C (1473 K) et 1400 °C (1673 K).

Après frittage le moule est usiné à l'outil coupant de sorte à lui conférer une forme précise et un état de surface Ra de 0,8 µm. Le moule (730) est ensuite émaillé en déposant par pulvérisation sur la surface moulante, une couche (732) d'émail. L'ensemble est ensuite cuit à une température de l'ordre de 1000 °C (1273 K).

Selon cet exemple de réalisation, le contre-moule est obtenu par un procédé similaire ou un autre procédé de mise en oeuvre. La surface moulante dudit contre-moule (770) est revêtue au pinceau d'une couche (non représentée) d'une suspension de particules de ferrite dans un liant inorganique d'aluminium phosphate.

Le choix d'un tau de ferrite de 15 % à 30 % dans l'émail permet de conserver la compatibilité des coefficients de dilatation thermique entre le substrat et le revêtement, et d'éviter les phénomènes de tressaillage, mais aussi d'obtenir un état de surface avec un Ra inférieur ou égal à 1 µm après cuisson.

La description ci-avant et les exemples de réalisation montrent que l'invention atteint les objectifs visés, en particulier elle permet le chauffage et la cuisson-consolidation d'une préforme fibreuse composite dans des conditions contrôlées et avec des temps de cycles réduits.

## Revendications

1. Dispositif (100) adapté au chauffage pour la cuisson ou le compactage/consolidation d'une préforme (150, 700) composite fibreuse à matrice polymère, lequel dispositif comporte :
a. un corps (131, 431, 471, 730, 770) de moule constitué d'un matériau céramique transparent aux micro-ondes et comportant une première empreinte ;
b. une couche (132, 432, 472, 532, 732) de revêtement comportant un matériau ferrimagnétique couvrant la surface de l'empreinte
c. un deuxième (471, 770) corps de moule constitué d'un matériau céramique comportant une deuxième empreinte complémentaire de la première empreinte, la surface de ladite deuxième empreinte comportant une couche (472) de revêtement constituée d'un matériau comprenant un composant ferrimagnétique ;
d. la première et la deuxième empreinte définissant une cavité à volume constant.

2. Dispositif selon la revendication 1, dans lequel le matériau céramique constituant un corps de moule comprend une cordiérite.

3. Dispositif selon la revendication 2, dans lequel le matériau ferrimagnétique est un ferrite.

4. Dispositif selon la revendication 3, dans lequel le ferrite est un ferrite spinelle de nickel-zinc (NiZn).

5. Dispositif selon la revendication 3, dans lequel la couche de revêtement est une couche de cordiérite chargée en ferrite.

6. Dispositif selon la revendication 5, dans lequel la teneur en ferrite dans la couche de revêtement est comprise entre 15 % et 30 % pondéraux.

7. Dispositif selon la revendication 6, dans lequel l'épaisseur de la couche de revêtement est comprise entre 3 mm et 5 mm.

8. Dispositif selon la revendication 3, dans lequel le matériau ferrimagnétique est contenu dans une couche (732) d'émail.

9. Dispositif selon la revendication 8, dans lequel le matériau ferrimagnétique est compris dans la couche d'émail sous la forme de particules d'un diamètre majoritairement compris entre 10 µm et 100 µm pour un d₅₀ compris entre 50 µm et 70 µm.

10. Dispositif selon la revendication 9, dans lequel le tau de matériau ferrimagnétique compris dans la couche d'émail (732) est compris entre 15 % et 30 % en teneur pondérale.

11. Dispositif selon la revendication 1, dans lequel la couche (432, 472, 732) de revêtement couvre la surface de l'empreinte selon une épaisseur variable de sorte à maîtriser la répartition de température sur ladite surface de l'empreinte.

12. Dispositif selon la revendication 1, dans lequel :
e. une couche (533) de revêtement non ferrimagnétique couvre tout ou partie de la couche de revêtement comportant un matériau ferrimagnétique.

13. Dispositif selon la revendication 12, dans lequel la couche (533) de revêtement non ferrimagnétique est de conductivité thermique élevée de sorte à uniformiser la dissipation thermique à la surface de l'empreinte.

14. Dispositif selon la revendication 12, dans lequel la couche (533) de revêtement non ferrimagnétique est thermiquement isolante de sorte à limiter le transfert thermique entre l'empreinte et la préforme.

15. Dispositif selon la revendication 2, dans lequel le matériau constituant un corps de moule comporte un renfort.

## Patentansprüche

1. Vorrichtung (100), die zum Erhitzen zur Härtung oder Verdichtung/Verfestigung eines Vorformlings (150, 700) aus Faserverbundwerkstoff mit Polymermatrix geeignet ist, wobei die Vorrichtung umfasst:
a. einen Formwerkzeugkörper (131, 431, 471, 730, 770), der aus einem für Mikrowellen durchlässigen keramischen Material besteht und ein erstes Formnest umfasst;
b. eine Überzugsschicht (132, 432, 472, 532, 732), die ein ferrimagnetisches Material umfasst, das die Oberfläche des Formnestes bedeckt;
c. einen zweiten Formwerkzeugkörper (471, 770), der aus einem keramischen Material besteht, der ein zweites Formnest umfasst, das komplementär zum ersten Formnest ausgebildet ist, wobei die Oberfläche dieses zweiten Formnestes eine Überzugsschicht (472) umfasst, die aus einem Material besteht, das eine ferrimagnetische Komponente beinhaltet;
d. wobei das erste und das zweite Formnest einen Hohlraum mit konstantem Volumen definieren.

2. Vorrichtung nach Anspruch 1, wobei das einen Formwerkzeugkörper bildende Material ein Cordierit beinhaltet.

3. Vorrichtung nach Anspruch 2, wobei das ferrimagnetische Material ein Ferrit ist.

4. Vorrichtung nach Anspruch 3, wobei das Ferrit ein Spinellferrit von Nickel-Zink (NiZn) ist.

5. Vorrichtung nach Anspruch 3, wobei die Überzugsschicht eine mit Ferrit verstärkte Cordieritschicht ist.

6. Vorrichtung nach Anspruch 5, wobei der Ferritgehalt in der Überzugsschicht zwischen 15 und 30 Gew.-% beträgt.

7. Vorrichtung nach Anspruch 6, wobei die Dicke der Überzugsschicht zwischen 3 mm und 5 mm beträgt.

8. Vorrichtung nach Anspruch 3, wobei das ferrimagnetische Material in einer Emailleschicht (732) enthalten ist.

9. Vorrichtung nach Anspruch 8, wobei das ferrimagnetische Material in der Emailleschicht in Form von Partikeln mit einem mehrheitlichen Durchmesser zwischen 10 µm und 100 µm bei einem d₅₀ zwischen 50 µm und 70 µm enthalten ist.

10. Vorrichtung nach Anspruch 9, wobei der Gehalt an ferrimagnetischem Material in der Emailleschicht (732) zwischen 15 und 30 Gew.-% beträgt.

11. Vorrichtung nach Anspruch 1, wobei die Überzugsschicht (432, 472, 732) die Oberfläche des Formnestes mit einer variablen Dicke bedeckt, so dass die Temperaturverteilung auf der Oberfläche des Formnestes kontrolliert ist.

12. Vorrichtung nach Anspruch 1, wobei:
e. eine nicht ferrimagnetische Überzugsschicht (533) die gesamte oder einen Teil der ein ferrimagnetisches Material beinhaltenden Überzugsschicht bedeckt.

13. Vorrichtung nach Anspruch 12, wobei die nicht ferrimagnetische Überzugsschicht (533) stark wärmeleitend ist, so dass die Wärmeabstrahlung an der Oberfläche des Formnestes vereinheitlicht ist.

14. Vorrichtung nach Anspruch 12, wobei die nicht ferrimagnetische Überzugsschicht (533) wärmeisolierend ist, so dass der Wärmeübergang zwischen dem Formnest und dem Vorformling begrenzt ist.

15. Vorrichtung nach Anspruch 2, wobei das einen Formwerkzeugkörper bildende Material eine Verstärkung beinhaltet.

## Claims

1. Device (100) suitable for heating, curing or the compacting/consolidation of a fibrous polymer matrix composite preform (150, 700), which device comprises:
a. a mould body (131, 431, 471, 730, 770) made of a ceramic material that is transparent to microwaves and comprising a first die shape;
b. a coating layer (132, 432, 472, 532, 732) comprising a ferrimagnetic material covering the surface of the die shape;
c. a second mould body (471, 770) formed of a ceramic material comprising a second die shape complementary to the first die shape, the surface of said second die shape comprising a coating layer (472) formed of a material comprising a ferrimagnetic component;
d. the first and the second die shapes defining a cavity of constant volume.

2. Device according to Claim 1, in which the ceramic material forming a mould body comprises a cordierite.

3. Device according to Claim 2, in which the ferrimagnetic material is a ferrite.

4. Device according to Claim 3, in which the ferrite is a nickel-zinc (NiZn) spinel ferrite.

5. Device according to Claim 3, in which the coating layer is a ferrite-filled cordierite layer.

6. Device according to Claim 5, in which the content of ferrite in the coating layer is between 15% and 30% by weight.

7. Device according to Claim 6, in which the thickness of the coating layer is between 3 mm and 5 mm.

8. Device according to Claim 3, in which the ferrimagnetic material is contained in an enamel layer (732) .

9. Device according to Claim 8, in which the ferrimagnetic material is included in the enamel layer in the form of particles having a diameter predominantly between 10 µm and 100 µm for a d₅₀ of between 50 µm and 70 µm.

10. Device according to Claim 9, in which the amount of ferrimagnetic material included in the enamel layer (732) is between 15% and 30% by weight content.

11. Device according to Claim 1, in which the coating layer (432, 472, 732) covers the surface of the die shape with a variable thickness so as to control the temperature distribution on said surface of the die shape.

12. Device according to Claim 1, in which:
e. a non-ferrimagnetic coating layer (533) covers all or part of the coating layer comprising a ferrimagnetic material.

13. Device according to Claim 12, in which the non-ferrimagnetic coating layer (533) is of high thermal conductivity so as to make the thermal dissipation at the surface of the die shape uniform.

14. Device according to Claim 12, in which the non-ferrimagnetic coating layer (533) is thermally insulating so as to limit the heat transfer between the die shape and the preform.

15. Device according to Claim 2, in which the material forming a mould body comprises a reinforcement.
